Europäisches Patentamt

(19) European Patent Office

Office européen des brevets

(11) Numéro de publication: **0 278 849**
**B1**

(12) **FASCICULE DE BREVET EUROPEEN**

(45) Date de publication du fascicule du brevet:
18.04.90

(51) Int. Cl.⁴: **B29B 7/76**

(21) Numéro de dépôt: **88400216.3**

(22) Date de dépôt: **29.01.88**

(54) **Dispositif de mélange de fluides, notamment de liquides, et distribution du mélange ainsi réalisé et appareil comportant un tel dispositif.**

(30) Priorité: **30.01.87 FR 8701117**

(43) Date de publication de la demande:
**17.08.88 Bulletin 88/33**

(45) Mention de la délivrance du brevet:
**18.04.90 Bulletin 90/16**

(84) Etats contractants désignés:
**AT BE CH DE ES FR GB GR IT LI LU NL SE**

(56) Documents cités:
**US-A- 4 133 483**

(73) Titulaire: **COMPTOIR GENERAL D'EMBALLAGE (SA), 84 à 94, rue Louis Becker, F-69100 Villeurbanne(FR)**

(72) Inventeur: **Carrillon, Henri, 7, rue d'Alsace, F-69100 Villeurbanne(FR)**

(74) Mandataire: **Derambure, Christian, BUGNION ASSOCIES 4 square Jean Moulin, F-73100 Aix les Bains(FR)**

**Description**

L'invention concerne un dispositif de mélange de fluides, notamment de liquides, et de distibution du mélange ainsi réalisé. L'invention est avantageusement applicable pour mélanger et distribuer un mélange de produits liquides réagissant chimiquement, tels que des polyols ou résines organiques liquides avec des isocyanates pour former de la mousse polyuréthane utilisée par exemple pour l'emballage.

Le problème principal rencontré avec tous les dispositifs connus provient du fait que, lorsque les fluides mélangées réagissent rapidement et fortement, ou sont chacun susceptibles de sécher ou durcir, le dispositif finit par se boucher. Il est donc nécessaire de pouvoir déboucher les conduits d'alimentation, la chambre de mélange, l'orifice de distribution, et tous les organes du dispositif qui viennent en contact avec l'un au moins des fluides.

On connaît déjà de très nombreux dispositifs permettant de distribuer de la mousse polyuréthane et visant à résoudre le problème mentionné ci-dessus.

Ainsi, les brevets américains 4 023 733, 3 263 928 et français 2 122 920 décrivent un tel dispositif dans lequel la chambre de mélange comporte un noyau de téflon formant un alésage de mélange dans lequel coulisse une tige de réglage pour venir fermer ou ouvrir les conduits d'admission de fluides qui débouchent dans l'alésage. Cette solution n'étant pas suffisante en soi, il a été proposé d'autres dispositions supplémentaires pour éviter les phénomènes de bouchage. Ainsi, on sait qu'il est avantageux de décaler longitudinalement les conduits d'admission respectifs des fluides, de prévoir un réservoir de solvant à l'arrière de la chambre, ou d'injecter du solvant ou de l'air comprimé à travers les conduits et/ou à travers la chambre de mélange.

Par ailleurs, il est évident et connu qu'il est avantageux de pouvoir démonter le dispositif, et notamment la chambre de mélange (avec ou sans tige de réglage) qui doit pouvoir être rempacée et/ou nettoyée lorsqu'elle est trop bouchée (brevets américains 3 263 928, 3 417 923, 3 784 110, 3 224, 642, 3 291 396, 4 469 251 et français 2 511 889).

Cependant, les dispositifs connus dans lesquels la chambre de mélange peut être remplacée ne donnent pas satisfaction en pratique car :
. Lorsque la tige est solidaire du dispositif, le remplacement de la chambre nécessite l'extraction de la tige hors du support et son insertion dans une nouvelle chambre ce qui ne peut généralement se faire sans endommager le noyau neuf et les portées de guidage de la tige.
. Les modes de réalisation connus de l'association amovible de la chambre de mélange et/ou de la tige au support formé par le dispositif et/ou aux moyens de commande de la tige ne permettent pas une association suffisamment précise et centrée par rapport à ce support et/ou par rapport aux moyens de commande, ce qui engendre des usures rapides de la tige et du noyau, et engendre la mise en correspondance des conduits d'amenée de fluides du support du dispositif avec ceux de la chambre de mélange.

. Les moyens d'association amovible connus de la chambre de mélange au support ne sont pas suffisamment résistants et arrivent à se rompre avant le bouchage complet du dispositif et le remplacement ou le nettoyage de la chambre de mélange, ce qui peut engendrer des accidents et/ou une détérioration complète du dispositif ou de ses éléments essentiels les plus coûteux.
. Les chambres de mélange, et surtout les tiges qui coulissent dans le noyau, coûtent cher et doivent être usinées avec und grande précision. Il n'est donc pas souhaitable de devoir prévoir systématiquement plusieurs jeux de chambres de mélange et/ou de tiges.
. Les manipulations de démontage et de remplacement sont longues et délicates à effectuer, ce qui nuit à la productivité et peut engendrer des chocs, chutes ou salissures de la chambre de mélange.

Lorsque la tige est détachable des moyens de commande pour remplacer la chambre de mélange, l'actionnement du dispositif lorsque la tige de réglage est mal associée aux moyens de commande peut provoquer des accidents ou détruire des parties essentielles et coûteuses du dispositif.

Par ailleurs, l'inventeur a déterminé que dans la pratique, l'alésage de la chambre de mélange ne se bouche que très rarement puisque la tige chasse les produits de cet alésage en position fermée, et que les problèmes de bouchage ne subsistent essentiellement que dans les conduits d'amenée des fluides dans le support et dans la chambre de mélange.

Dès lors, l'inventeur a montré que, contrairement à ce qu'enseigne l'art antérieur, il n'est pas souhaitable de pouvoir détacher la chambre de mélange et surtout les moyens de réglage des moyens de commande et du support, sauf éventuellement de façon exceptionnelle en cas de bouchage complet e la chambre de mélange.

L'invention a donc pour objet général un tel dispositif plus fiable et plus sûr que dans l'art antérieur, qui ne se bouche que très rarement et après une très longue utilisation, et qui soit d'un entretien facile et sans danger.

Plus particulièrement, les buts essentiels de l'invention sont de remédier aux inconvénients des dispositifs connus et de :
. permettre à la fois un nettoyage facile et rapide des conduits d'amenée des fluides du support et de la chambre de mélange, tout en évitant et en interdisant toute dissociation de la tige de réglage par rapport à ses moyens de commande.
. proposer un dispositif dont l'utilisation et l'entretien sont plus économiques que pour ceux de l'art antérieur.
. permettre un remontage rapide, facile et précis de la chambre de mélange sur le support, les conduits d'amenée de fluides du support étant parfaitement et automatiquement en correspondance avec ceux de la chambre de mélange, la chambre de mélange étant parfaitement positionnée par rapport aux moyens de réglage.
. assurer une association rigide amovible de la chambre de mélange au support plus fiable et plus résistante que dans l'art antérieur, notamment qui résiste même lorsque la chambre de mélange est totalement bouchée.

. proposer un dispositif dont l'utilisation et l'entretien sont absolument sans danger et répondent aux normes de sécurité les plus sévères.

Pour ce faire, l'invention propose, selon une première caractéristique essentielle, un dispositif de mélange de fluides, notamment de liquides, et de distribution du mélange réalisé, comprenant un support, une chambre de mélange associée rigidement et de façon amovible au support, des moyens de réglage mobiles dans la chambre de mélange pour régler de l'intérieur le débit des fluides admis dans la chambre de mélange - notamment permettant de fermer ou d'ouvrir les conduits d'admission des fluides dans la chambre de mélange -, et des moyens de commande des moyens de réglage, ces moyens de commande étant solidaires du support, caractérisé en ce que les moyens de réglage sont associés aux moyens de commande de façon à être mobiles mais non immédiatement dissociables par rapport à ces moyens de commande, ces moyens de réglage étant par ailleurs indépendants du support, de sorte que ces moyens de réglage peuvent être déplacés avec la chambre de mélange par rapport au support, ce qui permet notamment le dégagement des conduits d'admission et leur nettoyage sans dissociation des moyens de réglage par rapport aux moyens de commande.

De préférence, le dispositif comporte deux tiges distinctes : une tige de réglage susceptible de coulisser dans un alésage interne de mélange de la chambre de mélange et guidée dans son coulissement par cette chambre de mélange pour constituer les moyens de réglage du débit des fluides et une tige de commande solidaire des moyens de commande, susceptible de coulisser par rapport au support et guidée dans son coulissement par ce support,, pour commander la tige de réglage et les deux tiges sont associées l'une à l'autre de façon mobile l'une par rapport à l'autre mais non immédiatement dissociable l'une de l'autre.

Les moyens de réglage des moyens de commande sont des moyens d'articulation et la chambre de mélange est associée à une surface libre extérieure du support, de façon à pouvoir être déplacée sensiblement perpendiculairement à cette surface libre lorsqu'elle est dissociée du support.

L'invention propose aussi, dans une seconde caractéristique essentielle, un dispositif de mélange de fluides, notamment de liquides, et de distribution du mélange réalisé, comprenant un support, une chambre de mélange associée rigidement et de façon amovible au support, au moins un organe de réglage mobile à coulissement axial dans la chambre de mélange pour régler le débit des fluides admis dans la chambre de mélange - notamment permettant de fermer ou d'ouvrir les conduits d'admission des fluides dans la chambre de mélange, caractérisé en ce que les moyens d'association rigide amovible de la chambre de mélange au support comportent des moyens spécifiques d'alignement et/ou de calage axial de la chambre de mélange par rapport au support, de sorte que la chambre de mélange lorsqu'elle est associée au support est et reste dans une position déterminée et précise alignée par rapport à l'axe de coulissement de l'organe de réglage, et/ou calée sans jeu axial possible.

Les moyens spécifiques d'alignement et de calage axial peuvent être constitués par des formes respectives et complémentaires données à la surface externe de la chambre de mélange en contact avec le support et à la surface du support formant logement de la chambre de mélange et qui est contact avec la surface externe de cette chambre. Il s'agit par exemple d'au moins une saillie engagée dans au moins une gorge.

Les moyens mobiles de réglage sont guidés dans leurs mouvements dans la chambre de mélange par des moyens de guidage solidaires de et intégrés à la chambre de mélange à l'exclusion de tout autre guidage par rapport au support et/ou aux moyens de commande.

L'invention concerne aussi un appareil de distribution de mousse, notamment de mousse polyuréthane notamment pour l'emballage ou pour d'autres applications, et notamment manuel, caractérisé en ce qu'il comporte un dispositif selon l'invention.

D'autres avantages et caractéristiques apparaîtront à la lumière de la description suivante d'un mode de réalisation préférentiel de l'invention représenté sur les figures, dans lesquelles :

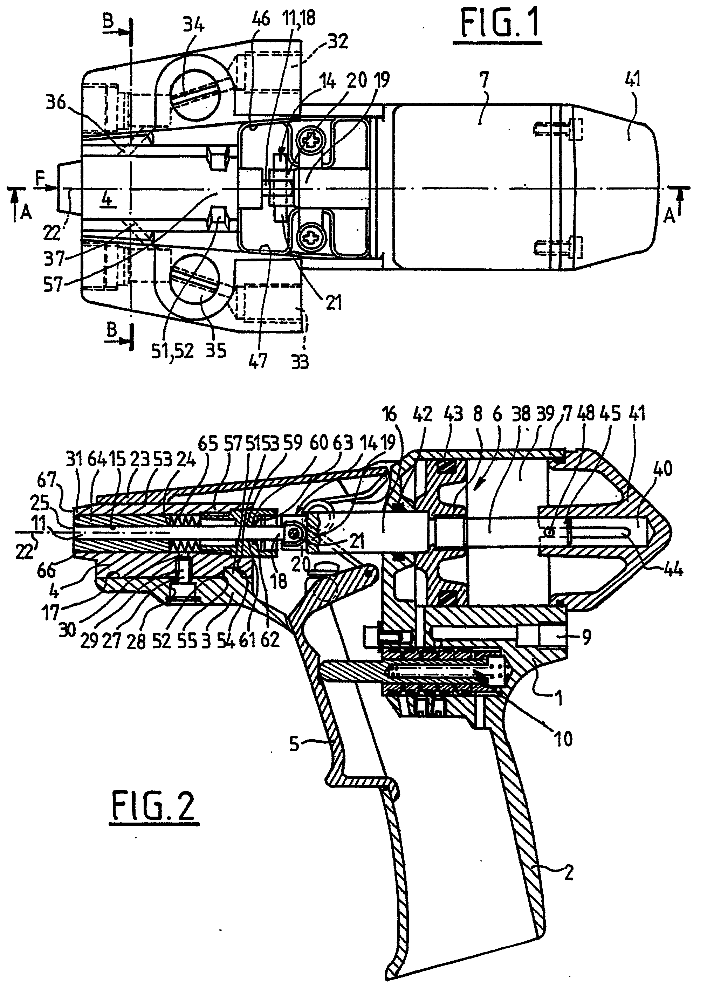

. La figure 1 est une vue de dessus d'un dispositif selon l'invention sans capot de protection supérieur, pour plus de clarté.

. La figure 2 est une vue en coupe verticale selon la ligne A-A de la figure 1 d'un dispositif selon l'invention.

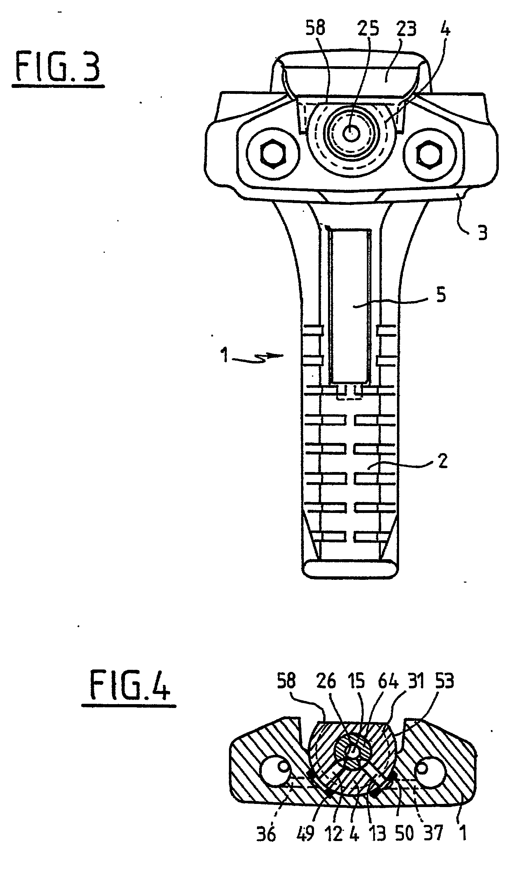

. La figure 3 est une vue de face selon la flèche F de la figure 1 d'un dispositif selon l'invention.

. La figure 4 est une vue en coupe selon la ligne B-B de la figure 1.

Sur les figures, on a représenté un mode de réalisation préférentiel d'un dispositif de mélange de fluides, notamment de liquides, et de distribution du mélange réalisé et qui comporte un support 1 en forme générale de pistolet pour pouvoir être manipulé facilement. Le support 1 comporte donc une partie inférieure 2 formant poignée de préhension, et une partie avancée 3 en forme générale de canon qui supporte une chambre de mélange 4. Le dispositif comporte en outre des moyens 5 d'actionnement manuel, notamment sous forme d'une gâchette, et qui permettent d'actionner des moyens 6 de commande montés à la partie arrière supérieure 7 du support 1.

Les moyens 5 d'actionnement et les moyens 6 de commande sont déjà connus, notamment des brevets américains 4 023 733, 4 469 251, 3 263 928 et ne seront pas décrits en détail. Les moyens 6 de commande sont avantageusement formés d'un vérin pneumatique double effet à piston 8 alimenté en air comprimé par une admission 9 arrière, les moyens 5 d'actionnement comportant une valve commandant l'actionnement du vérin dans un sens ou dans l'autre.

Un tel dispositif manuel est utilisé selon l'invention dans un appareil manuel de distribution de mousse, notamment de mousse polyuréthane pour l'emballage, qui comporte en outre des réservoirs indépendants de fluide, et des moyens d'amenée de fluides sous pression du dispositif.

Bien que l'invention soit préférentiellement destinée à un tel appareil manuel, elle est cependant aussi applicable pour réaliser un appareil automatique tel que celui décrit dans le brevet américain 4 196 160, et qui comportera alors un dispositif selon l'invention mais pour lequel le support 1 et les moyens 5 d'actionnement seront adaptés en conséquence.

Sur les figures, le dispositif est représenté prêt à fonctionner, mais non actionné. Sur la figure 1, le capot de protection supérieur 23 recouvrant normalement le chambre de mélange 4, les moyens 6 de commande et les moyens 11 de réglage, n'est pas représenté pour plus de clarté.

Selon un premier aspect de l'invention, un dispositif de mélange de fluides, notamment de liquides, et de distribution du mélange réalisé, comprenant un support 1, une chambre de mélange 4 associée rigidement et de façon amovible au support 1, des moyens 11 de réglage mobiles dans la chambre de mélange 4 pour régler de l'intérieur le débit des fluides admis dans la chambre de mélange 4 - notamment permettant de fermer ou d'ouvrir les conduits d'admission 12, 13 des fluides dans la chambre de mélange 4 -, et des moyens 6 de commande des moyens 11 de réglage, ces moyens 6 de commande étant solidaires du support 1, est caractérisé en ce que les moyens 11 de réglage sont associés aux moyens 6 de commande de façon à être mobiles mais non immédiatement dissociables par rapport à ces moyens 6 de commande, ces moyens 11 de réglage étant par ailleurs indépendants du support 1, de sorte que ces moyens 11 de réglage peuvent être déplacés avec la chambre de mélange 4 par rapport au support 1, ce qui permet notamment le dégagement des conduits d'admission 12, 13 et leur nettoyage sans dissociation des moyens 11 de réglage par rapport aux moyens 6 de commande.

On entend par "non immédiatement dissociables", le fait que les moyens 11 de réglage, bien que montés pour être mobiles par rapport aux moyens 6 de commande, ne peuvent en être dissociés par la seule dissociation de la chambre de mélange 4 du support 1 sans démontage ultérieur d'au moins un autre élément du support 1 et/ou des moyens 6 de commande ou détérioration d'une partie du dispositif, par exemple des moyens 14 d'association des moyens 11 de réglage aux moyens 6 de commande.

De préférence, un dispositif selon l'invention comporte deux tiges 11, 16, distinctes : une tige 11 de réglage susceptible de coulisser dans un alésage interne de mélange 15 de la chambre de mélange 4 et guidée dans son coulissement par cette chambre de mélange 4 pour constituer les moyens de réglage du débit des fluides et une tige 16 de commande solidaire des moyens 6 de commande, susceptible de coulisser par rapport au support 1 et guidée dans son coulissement par ce support 1, pour commander la tige 11 de réglage et les deux tiges 11, 16 sont associées l'une à l'autre de façon mobile l'une par rapport à l'autre mais non immédiatement dissociable l'une de l'autre. Les moyens 14 d'association mobile des moyens 11 de réglage aux moyens 6 de commande sont des moyens d'articulation et la chambre de mélange 4 est associée à une surface libre 17 extérieure du support 1, de façon à pouvoir être déplacée sensiblement perpendiculairement à cette surface libre 17 lorsqu'elle est dissociée du support 1. Dans le mode de réalisation préférentiel représenté, les tiges 11, 16 de réglage et de commande sont articulées l'une à l'autre par leurs extrémités libres 18, 19 notamment par une rotule ou articulation 14 à chape 20 et goupille 21 ou autrement. Les tiges 11, 16 sont sensiblement alignés l'une avec l'autre selon un axe 22 lorsque la chambre de mélange 4 est associée au support 1 et qu'elles sont en position de fonctionnement. On remarque que contrairement à l'art antérieur, le fait que les moyens 14 d'association des tiges 11, 16 entre elles comportent une articulation permet de compenser les défauts d'alignement des tiges 11, 16 l'une par rapport à l'autre, notamment dus à des défauts d'alignement de la chambre de mélange 4 par rapport à l'axe 22 de coulissement en translation de la tige 16 de commande solidaire du piston 8. De ce fait, la durée de vie de la chambre de mélange 4 et de la tige 11 de réglage est augmentée. L'axe 22 commun est aussi l'axe de coulissement des tiges 11, 16 mus en translation lorsque les moyens 5 d'activement sont actionnés.

La tige 11 de réglage pénètre dans l'alésage de mélange 15 par l'extrémité 24 de cet alésage 15 opposée à celle 25 formant orifice de distribution du mélange réalisé et les conduits d'admission 12, 13 débouchent sur la surface interne 26 de l'alésage de mélange 15 (figure 4).

La chambre de mélange 4 est placée sur une surface libre extérieure 17 de la partie avancée 3 du support 1, et est associée rigidement mais de façon amovible à ce support 1 par l'intermédiaire d'une vis 27 engagée par dessous dans un alésage 28 du support 1 perpendiculaire à l'axe 22 de coulissement et sertie dans cet alésage 28. La partie filetée 29 de cette vis 27 débouche vers le haut et saille de la surface libre 17 pour pénétrer dans un teraudage 30 ménagé dans le carter 31 de la chambre de mélange 4.

Les tuyaux d'amenée (non représentés) de fluides au dispositif peuvent être connectés de chaque côté du support 1 aux admissions 32, 33 qui alimentent par des vannes 34, 35 connues soi (par exemple du brevet français 2 511 889) les conduits d'amenées 36, 37 du support 1, prolongés par le conduits d'admission 12, 13 de la chambre de mélange 4 (figure 4) qui débouchent dans l'alésage de mélange 15.

La tige 16 de commande est associée au et solidaire dans ses déplacements du piston 8, par exemple par des moyens d'association à circlips et gorge. Elle traverse ce piston 8 sur l'arrière et comporte un prolongement 38, à l'opposé de son extrémité libre 16 d'association avec la tige 11 de réglage. Le prolongement 38 traverse la chambre 39 du vérin de commande et coulisse dans un alésage arrière 40 ménagé dans le capot arrière 41 du support 1. L'alésage arrière 40 est parallèle à l'axe 22 et permet de guider, avec une portée 42 du support 1 traversée par la tige 16 de commande, et la portée 43 du piston 8 sur les parois de la chambre 39, l'ensemble tige 16 de commande et piston 8 dans ses déplacements.

Au moins une gorge 44 (de préférence deux gorges diamétralement opposées) s'étendant parallèlement à l'axe 22 est ménagée dans l'alésage arrière 40. Une goupille 48 traversant l'extrémité libre 45 du prolongement arrière 38 de la tige 16 de commande, perpendiculairement à l'axe 22, saille transversalement de ce prolongement 38 pour être engagée dans chaque gorge 44 et interdire toute rotation intempestive de la tige 16 de commande autour de l'axe 22.

Lorsqu'on actionne la gâchette 5, le piston 8 est déplacé vers l'arrière, entraînant la tige 16 de commande puis la tige 11 de réglage qui lui est associée. Les conduits 12, 13 d'admission dans l'alésage 15 sont alors découverts, ce qui permet le mélange des fluides dans cet alésage 15 et la distribution du mélange sous pression par l'orifice 25. Lorsqu'on relache la gâchette, la tige 11 de réglage recouvre les conduits 12, 13 et chasse le surplus de mélange hors de l'alésage 15.

Si les conduits 12, 13 d'admission de fluides de la chambre de mélange 4 ou les conduits 36, 37 d'amenée du support 1 se bouchent, il est possible de les déboucher de la façon suivante : on ôte le capot supérieur 23, on dévisse la vis 27 pour libérer la chambre de mélange 4, et on fait pivoter l'ensemble chambre de mélange 4 et tige 11 de réglage autour de l'articulation 14, vers le haut, afin d'accéder aux conduits 12, 13, 36, 37 respectifs de la chambre de mélange 4 et du support 1. On peut alors déboucher simplement ces conduits (grâce à un solvant, de l'air comprimé...). On replace ensuite la chambre de mélange 4 sur la surface libre 17 du support 1 en faisant pivoter l'ensemble 4, 11, vers le bas et en revissant la vis 27 dans le taraudage 30. La vis 27 est avantageusement automatiquement placée par rapport au support 1 lorsqu'on la serre, grâce à la forme de ses portées sur le support 1, de sorte qu'elle positionne correctement angulairement la chambre de mélange 4 autour de l'axe 22, les conduits 36, 37 d'amenée du support, et 12, 13 d'admission de la chambre 4 communiquant les uns avec les autres. Des joints d'étanchéité 49, 50 de préférence solidaires du support 1 sont avantageusement interposés entre les conduits 36, 37 du support 1 et ceux 12, 13 de la chambre 4.

L'articulation 14 de la tige 11 de réglage par rapport à la tige 16 de commande doit donc être telle qu'elle permet un pivotement perpendiculairement à la surface libre 17 vers le haut de l'ensemble chambre 4 et tige 11 de réglage. Cette articulation 14 est avantageusement et préférentiellement constituée d'une chape 20 de l'extrémité libre 19 de la tige 16 de commande, dont la rainure est sensiblement verticale (en supposant le pistolet tenu verticalement), et dont les ailes sont pourvues de trous pour le passage d'une goupille 21. L'extrémité libre 18 de la tige 11 de réglage est engagée dans la rainure de la chape 20, et est pourvue aussi d'un tour de passage de la goupille 21. Pour palier tout éventuel problème d'alignement selon l'axe 21, ces trous (de la chape 20 et/ou de la tige 11) peuvent avoir une dimension supérieure à celle strictement nécessaire au seul passage de la goupille 21, notamment présenter une forme oblongue dans la direction verticale. En variante, ou en combinaison les moyens d'association de la chambre de mélange 4 au support 1 sont agencés de manière à permettre le rattrapage de tout défaut d'alignement et notamment ces moyens d'association autorisent un certain frottement relatif de la chambre de mélange 4 par rapport au support 1. Lorsque cette goupille 21 est en place, elle traverse les trous de la chape 20 et celui de la tige 11 de réglage, et s'étend sensiblement horizontalement. La goupille 21 peut être montée serrée, frettée, ou par un montage gras. Des moyens de sécurité peuvent être prévus pour empêcher tout dégagement intempestif de la goupille 21 hors de la chape 20. Cependant, on remarquera que la goupille 21 en position horizontale ne peut pas être aisément chassée de la chape 20. Selon l'invention, on prévoit préférentiellement que la goupille 21 a une longueur telle que son dégagement horizontal hors de la chape 20 est rendu impossible par les parois latérales sensiblement verticales 46, 47 du support qui s'étendent axialement.

Lorsque l'on souhaite dissocier la tige 11 de réglage de la tige 16 de commande et démonter l'articulation 14, on démonte le capot arrière 41, ce qui libère la goupille 48 des gorges 44, et autorise une rotation de la tige 16 de commande autour de son axe 22. On place ainsi la goupille 21 de l'articulation 14 en position verticale et pour la chasser verticalement vers le haut. Pour remonter l'articulation, les opérations inverses sont effectuées.

Malgré les caractéristiques précédentes, il peut se faire que les conduits 12, 13 36, 37 du support 1 et de la chambre 4 ne soient pas parfaitement alignés les uns avec les autres respectivement, notamment longitudinalement, ce qui doit être absolument évité.

De plus, l'inventeur a déterminé qu'un calage axial et un alignement parfait de la chambre de mélange 4 augmentent considérablement la durée de vie de cette chambre 4, et surtout les temps d'utilisation sans bouchage.

C'est pourquoi, l'invention propose aussi selon un second aspect, un dispositif de mélange de fluides, notamment de liquides, et de distribution du mélange réalisé, comprenant un support 1, une chambre de mélange 4 associée rigidement et de façon amovible au support 1, au moins un organe 11 de réglage mobile à coulissement axial dans la chambre de mélange 4 pour régler le débit des fluides admis dans la chambre de mélange 4, - notamment permettant de fermer ou d'ouvrir les conduits 12, 13 d'admission des fluides dans la chambre de mélange 4 -, caractérisé en ce que les moyens d'association rigide amovible de la chambre de mélange 4 au support 1 comportent des moyens 51, 52 spécifiques d'alignement et/ou de calage axial de la chambre de mélange 4 par rapport au support 1 de sorte que la chambre de mélange 4, lorsqu'elle est associée au support 1, est et reste dans une position déterminée et précise alignée par rapport à l'axe de coulissement 22 de l'organe 11 de réglage et/ou calée sans jeu axial possible.

De préférence, les moyens 51, 52 spécifiques d'alignement et de calage axial sont constitués par les formes respectives et complémentaires données à la surface externe 53 de la chambre de mélange 4 en contact avec le support 1 et à la surface 17 du support 1 formant logement de la chambre de mélange 4 et qui est en contact avec la surface externe 53 de cette chambre 4. Dans le mode de réalisation représenté, les moyens 51, 52 spécifiques d'alignement et/ou de calage axial comprennent au moins une saillie 51 - notamment au moins une nervure 51 en saillie de la surface libre 17 du support 1 -, engagée dans au moins une gorge 52 - notamment en creux de la surface externe 53 de la chambre de mélange 4-. Les saillie 51 et gorge 52 s'étendent dans un plan perpendiculaire à l'axe 22 de coulissement.

En variante ou en combinaison, les moyens 51, 52 spécifiques d'alignement et/ou de calage axial comprennent au moins une nervure en saillie de la chambre de mélange 4 et au moins une gorge du support 1.

La surface externe 53 de la chambre de mélange 4 est cylindrique ou pseudo-cylindrique et le support 1 comporte une surface 17 définissant un logement en creux pour la chambre de mélange 4, de forme complémentaire à celle de la surface externe 53, et les moyens 51, 52 spécifiques d'alignement et/ou de calage axial s'étendent dans un plan transversal sur au moins une partie périphérique des surfaces 53, 17 cylindriques ou pseudo-cylindriques en contact.

Une saillie 51 et une gorge 52 des moyens spécifiiques d'alignement et/ou de calage axial ont, en section droite transversale, sensiblement une forme de U dont les ailes 54, 55 divergent vers l'extérieur à partir de l'âme 56. De la sorte, le calage et l'alignement - axial sont mieux assurés, et le dégagement de la saillie 51 hors de la gorge 52 ne pose pas de problèmes, notamment lors du pivotement de la chambre 4 autour de l'articulation 14 de la tige 11 de réglage et de la tige 16 de commande.

De préférence, la chambre de mélange 4 s'étend dans la direction axiale de coulissement de l'organe 11 de réglage, comporte un alésage central 15 dans lequel l'organe 11 de réglage est susceptible de coulisser en pénétrant par une extrémité 24 de cet alésage 15, et un orifice de distribution 25 constitué par l'extrémité opposée de l'alésage 15, et les moyens 51, 52 spécifiques d'alignement et/ou de calage axial sont situés au voisinage de la partie 57 de la chambre de mélange 4 axialement opposée à l'orifice de distribution 25. (figures 1 et 2).

Un méplat 58 est pratiqué sur la partie supérieure de la chambre 4, sur toute sa longueur. Le capot supérieur 23 de protection prend appui sur l'avant de ce méplat 58.

Selon une caractéristique importante de l'invention, les moyens 11 de règlage mobiles sont guidés dans leurs mouvements dans la chambre de mélange 4 par des moyens 59 de guidage solidaires de et intégrés à la chambre de mélange 4 à l'exclusion de tout autre guidage par rapport au support 1 et/ou aux moyens 6 de commande.

Les moyens 59 de guidage sont constitués par exemple d'un écrou vissé à l'arrière du carter 31 de la chambre 4, percé d'un alésage 61 traversé par la tige 11 qui porte sur cet alésage 61 un joint d'étanchéité 60 à l'arrière de et maintenu contre l'alésage 61 par une rondelle 62 et un circlips 63.

La chambre de mélange 4 comporte un noyau de Téflon® 64 ou de matière analogue à travers lequel un alésage 15 est réalisé, ce noyau 64 étant inséré dans un carter 31 et, au voisinage de l'orifice de distribution 25, le noyau 64 affleure le, ou saille du, carter 31 de sorte que le mélange distribué ne peut pas s'accumuler sur le carter 31 autour de l'orifice 25 (figure 2).

La chambre de mélange 4 comporte des moyens 65 élastiques de compression du noyau 64 du type presse-étoupe, et le noyau 64 comporte un épaulement de retenue 66 au voisinage de l'orifice 25, cet épaulement 66 coopérant avec un rebord 67 du carter 31 pour empêcher la sortie intempestive du noyau 64 hors du carter 31.

Classiquement, l'écrou des moyens 59 de guidage, coopérant avec un taraudage du carter 31 comprime des rondelles élastiques et le noyau 64 dans le carter 31 contre le rebord 67, ce qui forme presse-étoupe.

En variante non représentée, les moyens 51,52 spécifiques d'alignement et/ou de calage axial ont une forme telle qu'ils peuvent être dissociés par pivotement de la chambre de melange 4 dissociée du support 1 et des moyens 11 de réglage autour de leur articulation 14 avec les moyens 6 de commande. Par exemple, la saillie 51 et la gorge 52 sont courbées selon un cercle sensiblement centré sur l'articulation 14 de pivotement.

**Revendications**

1. Dispositif de mélange de fluides, notamment de liquides, et de distribution du mélange réalisé, comprenant un support (1), une chambre de mélange (4) associée rigidement et de façon amovible au support (1), des moyens (11) de réglage mobiles dans la chambre de mélange (4) pour régler de l'intérieur le débit des fluides admis dans la chambre de mélange (4), - notamment permettant de fermer ou d'ouvrir les conduits d'admission (12, 13) des fluides dans la chambre de mélange (4) -, et des moyens (6) de commande des moyens (11) de réglage, ces moyens (6) de commande étant solidaires du support (1), caractérisé en ce que les moyens (11) de réglage sont associés aux moyens (6) de commande de façon à être mobiles mais non immédiatement dissociables par rapport à ces moyens (6) de commande, ces moyens (11) de réglage étant par ailleurs indépendants du support (1), de sorte que ces moyens (11) de réglage peuvent être déplacés avec la chambre de mélange (4) par rapport au support (1), ce qui permet notamment le dégagement des conduits d'admission (12, 13) et leur nettoyage sans dissociation des moyens (11) de réglage par rapport aux moyens (6) de commande.

2. Dispositif selon la revendication 1, caractérisé en ce qu'il comporte deux tiges (11, 16) distinctes : une tige (11) de réglage susceptible de coulisser dans un alésage interne de mélange (15) de la chambre de mélange (4) et guidée dans son coulissement par cette chambre de mélange (4) pour constituer les moyens de réglage du débit des fluides et une tige (16) de commande, susceptible de coulisser par rapport au support (1) et guidée dans son coulissement par ce support (1), pour commander la tige (11) de réglage et en ce que les deux tiges (11, 16) sont associées l'une à l'autre de façon mobile l'une par rapport à l'autre, mais non immédiatement dissociable l'une de l'autre.

3. Dispositif selon l'une quelconque des revendications 1 à 2 caractérisé en ce que les moyens (14) d'association mobile des moyens (11) de réglage aux moyens (6) de commande, sont des moyens d'articulation, et en ce que la chambre de mélange (4) est associée à une surface libre (17) extérieure du support (1), de façon à pourvoir être déplacée sensiblement perpendiculairement à cette surface libre (17) lorsqu'elle est dissociée du support (1).

4. Dispositif selon les revendications 2 et 3, caractérisé en ce que les tiges (11, 16) de réglage et de commande sont articulées l'une à l'autre par leurs extrémités libres (18, 19), notamment par une rotule, ou une articulation (14) à chape (20) ou goupille (21), ou autrement.

5. Dispositif selon l'une quelconque des revendications 2 à 4, caractérisé en ce que les tiges (11, 16) sont sensiblement alignées l'une avec l'autre selon un axe (22) lorsque la chambre de mélange (4) est associée au support (1) et qu'elles sont en position de fonctionnement.

6. Dispositif selon l'une quelconque des revendications 2 à 5, caractérisé en ce que la tige (11) de réglage pénètre dans l'alésage de mélange (15) par l'extrémité (24) de cet alésage (15) opposée à celle (25) formant orifice de distribution du mélange réalisé, et en ce que les conduits d'admission (12, 13) débouchent sur la surface interne (26) de l'alésage de mélange (15).

7. Dispositif de mélange de fluides, notamment de liquides, et de distribution du mélange réalisé, comprenant un support (1), une chambre de mélange (4) associée rigidement et de façon amovible au support (1), au moins un organe (11) de réglage mobile à coulissement axial dans la chambre de mélange (4) pour régler débit des fluides admis dans la chambre de mélange (4), - notamment permettant de fermer ou d'ouvrir les conduits (12, 13) d'admission des fluides dans la chambre de mélange (4) -, caractérisé en ce que les moyens d'association rigide amovible de la chambre de mélange (4) au support (1) comportent des moyens (51, 52) spécifiques d'alignement et/ou de calage axial de la chambre de mélange (4) par rapport au support (1), de sorte que la chambre de mélange (4), lorsqu'elle est associée au support (1), est et reste dans une position déterminée et précise alignée par rapport à l'axe de coulissement (22) de l'organe (11) de réglage et/ou calée sans jeu axial possible.

8. Dispositif selon la revendication 7, caractérisé en ce que les moyens (51, 52) spécifiques d'alignement et de calage axial sont constitués par les formes respectives et complémentaires données à la surface externe (53) de la chambre de mélange (4) en contact avec le support (1) et à la surface (17) du support (1) formant logement de la chambre de mélange (4) et qui est en contact avec la surface externe (53) de cette chambre (4).

9. Dispositif selon l'une quelconque des revendications 7 et 8, caractérisé en ce que les moyens (51, 52) spécifiques d'alignement et/ou de calage axial comprennent au moins une saillie (51) engagée dans au moins une gorge (52) s'étendant dans un plan perpendiculaire à l'axe (22) de coulissement.

10. Dispositif selon la revendication 9, caractérisé en ce que les moyens (51, 52) spécifiques d'alignement et/ou de calage axial comprennent au moins une nervure (51) en saillie du support (1) et au moins une gorge (52) en creux de la chambre de mélange (4).

11. Dispositif selon l'une quelconque des revendications 9 et 10, caractérisé en ce que les moyens (51, 52) spécifiques d'alignement et/ou de calage axial comprennent au moins une nervure en saillie de la chambre de mélange (4) et au moins une gorge du support (1).

12. Dispositif selon l'une quelconque des revendications 7 à 11, caractérisé en ce que la surface externe (53) de la chambre de mélange (4) est cylindrique ou pseudo-cylindrique, en ce que le support (1) comporte une surface (17) définissant un logement en creux pour la chambre de mélange (4), de forme complémentaire à celle de la surface externe (53), et en ce que les moyens (51, 52) spécifiques d'alignement et/ou de calage axial s'étendent dans un plan transversal sur au moins une partie périphérique des surfaces (53, 17) cylindriques ou pseudo-cylindriques en contact.

13. Dispositif selon l'une quelconque des revendications 9 à 12 caractérisé en ce qu'une saillie (51) et une gorge (52) des moyens spéficiques d'alignement et/ou de calage axial est, en section droite transversale, sensiblement en forme de U dont les ailes (54, 55) divergent vers l'extérieur à partir de l'âme (56).

14. Dispositif selon l'une quelconque des revendications 7 à 13, caractérisé en ce que la chambre de mélange (4) s'étend dans la direction axiale de coulissement de l'organe (11) de réglage, comporte un alésage central (15) dans lequel l'organe (11) de réglage est susceptible de coulisser en pénétrant par une extrémité (24) de cet alésage (15) et un orifice de distribution (25) constitué par l'extrémité opposée de l'alésage (15), et en ce que les moyens (51, 52) spécifiques d'alignement et/ou de calage axial sont situés au voisinage de la partie (57) de la chambre de mélange (4) axialement opposée à l'orifice de distribution (25).

15. Dispositif selon l'une quelconque des revendications 1 à 14, caractérisé en ce que les moyens (11) de réglage mobiles sont guidés dans leurs mouvements dans la chambre de mélange (4) par des moyens (59) de guidage solidaires de et intégrés à la chambre de mélange (4) à l'exclusion de tout autre guidage par rapport au support (1) et/ou aux moyens (6) de commande.

16. Dispositif selon l'une quelconque des revendications 3 à 6 et selon l'une quelconque des revendications 7 à 15, caractérisé en ce que les moyens (51, 52) spécifiques d'alignement et/ou de calage axial ont une forme telle qu'ils peuvent être dissociés par pivotement de la chambre de mélange (4) dissociée du support (1) et des moyens (11) de réglage autour de leur articulation (14) avec les moyens (6) de commande.

**17.** Dispositif selon l'une quelconque des revendications 1 à 16, caractérisé en ce qu'il comporte des moyens (5) d'actionnement manuel, notamment sous forme de gâchette permettant d'actionner les moyens (6) de commande.

**18.** Dispositif selon la revendication 17, caractérisé en ce que le support (1) a une forme générale de pistolet pour pouvoir être manipulé facilement.

**19.** Dispositif selon l'une quelconque des revendications 1 à 18, caractérisé en ce que la chambre de mélange (4) comporte un noyau de Téflon ® (64) ou de matière analogue à travers lequel un alésage de mélange (15) est réalisé, ce noyau (64) étant inséré dans un carter (31), et en ce que, au voisinage de l'orifice de distribution (25), le noyau (64) affleure le, ou débouche du, arter (31) de sorte que le mélange distribué ne peut pas s'accumuler sur le carter (31) autour de l'orifice (25).

**20.** Dispositif selon la revendication 19, caractérisé en ce que la chambre de mélange (4) comporte des moyens (65) élastiques de compression du noyau (64) du type presse-étoupe, et en ce que le noyau (64) comporte un épaulement de retenue (66) au voisinage de l'orifice (25), cet épaulement (66) coopérant avec un rebord (67) du carter (31) pour empêcher la sortie intempestive du noyau (64) hors du carter (31).

**21.** Appareil de distribution de mousse, notamment de mousse polyuréthane pour l'emballage, caractérisé en ce qu'il comporte des réservoirs indépendants de fluides, et des moyens d'amenée de fluides sous pression à un dispositif selon l'une quelconque des revendications 1 à 20.

**22.** Appareil manuel de distribution de mousse, notamment de mousse polyuréthane pour l'emballage selon la revendication 21 caractérisé en ce qu'il comporte un disposititif à activement manuel selon la revendication 18.

**Claims**

1. Device for mixing fluids, particularly liquids, and distributing the mixture formed, comprising a support (1), a mixing chamber (4) associated rigidly and removably with the support (1), movable regulation means (11) in the mixing chamber (4), for regulating from inside the flow of the fluids admitted into the mixing chamber (4) – in particular for closing or opening the ducts (12, 13) admitting fluids into the mixing chamber (4) – and means for controlling the regulation means (11), these control means being fixed to the support (1), characterized in that the regulation means (11) are associated with the control means (6) so as to be movable but not immediately dissociable with respect to these control means (6), these regulation means (11) being further independent of the support (1) so that these regulation means may be displaced with the mixing chamber with respect to the support (1), which in particular allows the intake ducts (12, 13) to be disengaged and cleaned without dissociating the regulation means (11) with respect to the control means (6).

2. Device according to claim 1, characterized in that it comprises two separate rods (1, 16): a regulation rod (11) able to slide in an internal mixing bore (15) of the mixing chamber (4) and guided in its sliding by this mixing chamber (4) so as to form the means regulating the flow of the fluids and a control rod (16), able to slide with respect to the support (1) and guided in its sliding by this support (1), for controlling the regulation rod and in that the two rods (11, 16) are associated with each other movably with respect to each other but not immediately dissociable from each other.

3. Device according to any one of claims 1 to 2, characterized in that the means (14) for movably associating the regulation means (11) with the control means (6) are articulation means and in that the mixing chamber (4) is associated with a free external surface (17) of the support (1), so as to be able to be moved substantially perpendicularly to this free surface (17) when it is dissociated from the support (1).

4. Device according to claims 2 and 3, characterized in that the regulation and control rods (11, 16) are articulated with each other by their free ends (18, 19), particularly by means of a ball joint, or an articulation (14) with fork joint (20) or pin (21), or otherwise.

5. Device according to any one of claims 2 to 4, characterized in that the rods (11, 16) are substantially aligned with each other along an axis (22) when the mixing chamber (4) is associated with the support (1) and when they are in an operating position.

6. Device according to any one of claims 2 to 5, characterized in that the regulation rod (11) penetrates into the mixing bore (15) by the end (24) of this bore (15) opposite the one (25) forming an orifice for distributing the mixture formed, and in that the intake ducts (12, 13) open on the internal surface (26) of the mixing bore (15).

7. Device for mixing fluids, particularly liquids, and distributing the mixture formed, comprising a support (1), a mixing chamber (4) associated rigidly and removably with the support (1), at least one regulation member (1) slidably movable axially in the mixing chamber (4) for regulating the flow of fluids admitted into the mixing chamber (4) – particularly for closing or opening the ducts (12, 13) admitting the fluids into the mixing chamber (4) – characterized in that the means for rigidly and removably associating the mixing chamber (4) with the support (1) comprise specific means (51, 52) for axially alingning and/or adjusting the mixing chamber (4) with respect to the support (1) so that the mixing chamber (4), when it is associated with the support (1), is and remains in a defined and precise position aligned with respect to the sliding axis (22) of the regulation member (1) and adjusted without possible axial play.

8. Device according to claim 7, characterized in that the specific axial alignment and adjustment means (51, 52) are formed by the respective and complementary shapes given to the external surface (53) of the mixing chamber (4) in contact with the support (1) and to the surface (17) of the support (1) forming a housing for the mixing chamber (4) and which is in contact with the external surface (53) of this chamber (4).

9. Device according to any one of claims 7 and 8, characterized in that the specific axial alignment and adjustment means (51, 52) comprise at least one projection (51) engaged in at least one grovve (52) extending in a plane perpendicular to the sliding axis (22).

10. Device according to claim 9, characterized in that the specific axial alignment and adjustment means (51, 52) comprise at least one rib (51) projecting from the support (1) and at least one recessed groove (52) in the mixing chamber (4).

11. Device according to any one of claim 9 and 10, characterized in that the specific axial alignment and adjustment means (51, 52) comprise at least one projecting rib in the mixing chamber (4) and at least one groove in the support (1).

12. Device according to any one of claims 7 to 11, characterized in that the external surface (53) of the mixing chamber (4) is cylindrical or pseudo-cylindrical, in that the support (1) comprises a surface (17) defining a recessed housing for the mixing chamber (4), having a shape complementary to that fo the external surface (53) and in that the specific axial alignement and adjustment means (51, 52) extend in a transverse plane over at least a peripheral portion of the contacting cylindrical or pseudo-cylindrical surfaces (53, 17).

13. Device according to any one of claims 9 to 12, characterized in that a projection (51) and a groove (52) of the specific axial alignment and adjustment means has, in cross section, a shape substantially in the form of a U whose legs (54, 55) diverge outwardly from the web (56).

14. Device according to any one of claims 7 to 13, characterized in that the mixing chamber (4) extends in the axial sliding direction of the regulation member (11), and comprises a central bore (15) in which the regulation member (11) is able to slide while penetrating into one end (24) of this bore (15) and a distribution orifice (25) formed by the opposite end of the bore (15), and in that the specific axial alignment and adjustment means (51, 52) are situated in the vicinity of the portion (57) of the mixing chamber (4) axially opposite the distribution orifice (25).

15. Device according to any one of claim 1 to 14, characterized in that the movable regulation means (11) are guided in their movements in the mixing chamber (4) by guide means (59) fast with and integrated in the mixing chamber (4) to the exclusion of any other guide with respect to the support (1) and/or control means (6).

16. Device according to any one of claims 3 to 6 and according to any one of claims 7 to 15, characterized in that the specific axial alignment and adjustment means (51, 52) have a shape such that they may be dissociated by pivoting of the mixing chamber (4) dissociated from the support (1) and of the regulation means (11) about their articulation (14) with the control means (6).

17. Device according to any one of claims 1 to 16, characterized in that it comprises manual actuating means (5), particularly in the form of a trigger for actuating the control means (6).

18. Device according to claim 17, characterized in that the support (1) has a general pistol shape for easy handling.

19. Device according to any one of claims 1 to 18, characterized in that the mixing chamber (4) comprises a Teflon® or similar material core (64) through which a mixing bore (15) is formed, this core (64) being inserted in a casing (31), and in that, in the vicinity of the distribution orifice (25), the core (64) is flush with or opens from the casing (31) so that the mixture distributed cannot accumulate on the casing (31) about the orifice (25).

20. Device according to claim 19, characterized in that the mixing chamber (4) comprises resilient means (65) for compressing the core (64) of the gland type and in that the core (64) comprises a retaining shoulder (66) in the vicinity of the orifice (25), this shoulder (66) cooperating with a flange (67) of the casing (31) for preventing the core (64) from accidentally leaving the casing (31).

21. Apparatus for distributing foam, particularly polyurethane foam for packing, characterized in that it comprises independent fluid reservoirs and means for feeding fluids under pressure to a device according to any one of claims 1 to 20.

22. Apparatus for the manual distribution of foam, particularly polyurethane foam for packing according to claim 21, characterized in that it comprises a manual actuation device according to claim 18.

**Patentansprüche**

1. Vorrichtung zum Mischen von Medien, insbesondere von Flüssigkeiten, sowie zur Verteilung der so hergestellten Mischung, bestehend aus einem Halter (1), einer steif und fest mit dem Halter verbundenen Mischkammer (4), beweglichen Einstellvorrichtungen (11) in der Mischkammer (4) zur Regelung des Mediendurchsatzes im Inneren der Mischkammer (4), insbesondere zum Schließen und Öffnen der Zuleitungen (12, 13) der Medien in die Mischkammer (4), sowie aus Vorrichtungen (6) zum Steuern der Einstellvorrichtungen, wobei diese Steuervorrichtungen (6) fest mit dem Halter (1) verbunden sind, dadurch gekennzeichnet, daß die Einstellvorrichtungen (11) mit der Mischkammer gegenüber dem Halter (1) verstellt werden können, wodurch insbesondere die Zuleitungen (12, 13) freigelegt und ohne Trennung der Einstellvorrichtungen (11) von den Steuervorrichtungen (6) gereinigt werden können.

2. Vorrichtung nach Patentanspruch 1, dadurch gekennzeichnet, daß sie zwei unterschiedliche Stäbe (11, 16) aufweist: einen Einstellstab (11) zum Regeln des Mediendurchsatzes durch Hin- und Hergleiten in einer internen Mischbohrung (15) in der Mischkammer (4), die zugleich dessen Führung darstellt, sowie einem Steuerstab (16) zur Steuerung des Einstellstabes (11) durch Hin- und Hergleiten gegenüber dem Halter (1), der zugleich dessen Führung darstellt, sowie dadurch, daß die beiden Stäbe (11, 16) beweglich miteinander verbunden, jedoch nicht völlig voneinander unabhängig sind.

3. Vorrichtung nach einem der beiden Patentansprüche 1 und 2, dadurch gekennzeichnet, daß die beweglichen Verbindungen (14) zwischen Einstellvorrichtung (11) und Steuervorrichtung (16) aus Gelenkelementen bestehen und daß die Mischkammer (4) mit einer freien Fläche (17) außerhalb des Halters (1) derart verbunden ist, daß sie senkrecht zu dieser Fläche (17) verstellt werden kann, wenn sie vom Halter getrennt ist.

4. Vorrichtung nach Patentanspruch 2 und 3, dadurch gekennzeichnet, daß die Einstell- und Steuerstäbe (11, 16) an ihren freien Enden (18, 19) durch Gelenkvorrichtungen, insbesondere durch Kugelgelenke (14), Gabelgelenke (20), Gelenkzapfen (21) o.ä. miteinander verbunden sind.

5. Vorrichtung nach einem beliebigen der Patentansprüche 2–4, dadurch gekennzeichnet, daß die Stäbe (11, 16) in bezug auf eine gemeinsame Achse zueinander ausgerichtet sind, wenn die Mischkammer (4) mit dem Halter (1) verbunden ist und beide betriebsbereit sind.

6. Vorrichtung nach einem beliebigen der Patentansprüche 2–5, daduch gekennzeichnet, daß der Einstellstab (11) durch das Ende (24) der Mischbohrung (15) in diese gelangt, das dem Ende (25) gegenüberliegt, über das die Mischung verteilt wird, sowie dadurch, daß die Zuleitungen (12, 13) in die Innenseite (26) der Mischbohrung (15) münden.

7. Vorrichtung zum Mischen von Medien, insbesondere von Flüssigkeiten, sowie zur Verteilung der hergestellten Mischung, bestehend aus einem Halter (1), einer steif und abnehmbar mit dem Halter verbundenen Mischkammer (4), mindestens einer beweglichen Einstellvorrichtungen (11) in der Mischkammer (4) zur Regelung des Mediendurchsatzes im Inneren der Mischkammer (4), insbesondere zum Schließen und Öffnen der Zuleitungen (12, 13) der Medien in die Mischkammer (4), sowie aus Vorrichtungen (6) zum Steuern der Einstellvorrichtungen, wobei diese Steuervorrichtungen (6) fest mit dem Halter (1) verbunden sind, dadurch gekennzeichnet, daß die steifen und abnehmbaren Verbindungen der Mischkammer (4) zum Halter (1) spezifische Mittel (51, 52) zum Ausrichten bzw. Feststellen in Achsrichtung der Mischkammer (4) gegenüber dem Halter (1) verfügen, so daß die Mischkammer (4), wenn sie mit dem Halter (1) verbunden ist, in einer bestimmten und genauen Position gegenüber der Gleitachse (22) der Einstellvorrichtung (11) liegt bzw. ohne jegliches Spiel in Achsrichtung in dieser Stellung verbleibt.

8. Vorrichtung nach Patentanspruch 7, dadurch gekennzeichnet, daß die spezifischen Mittel (51, 52) zum Ausrichten bzw. Feststellen in Achsrichtung aus den entsprechenden zusätzlichen Formen bestehen, die an der Außenseite (53) der Mischkammer (4) durch den Kontakt mit dem Halter (1) und der Fläche (17) des Halters (1) gebildet werden, der die Aufnahme der Mischkammer (4) darstellt und mit der Außenfläche (53) dieser Mischkammer (4) Kontakt hat.

9. Vorrichtung nach einem beliebigen der Patentansprüche 7 oder 8, dadurch gekennzeichnet, daß spezifische Mittel (51, 52) zum Ausrichten bzw. Feststellen in Achsrichtung mindestens einen Vorsprung (51) aufweisen, der in mindestens einer Kehle (52) sitzt, die senkrecht zur Gleitachse (22) verläuft.

10. Vorrichtung nach Patentanspruch 9, dadurch gekennzeichnet, daß die spezifischen Mittel (51, 52) zum Ausrichten bzw. Feststellen in Achsrichtung mindestens eine aus dem Halter (1) vorspringende Rippe (51) sowie mindestens eine Kehle (52) in der Höhlung der Mischkammer (4) aufweisen.

11. Vorrichtung nach einem beliebigen der Patentansprüche 9 oder 10, dadurch gekennzeichnet, daß die spezifischen Mittel (51, 52) zum Ausrichten bzw. Feststellen in Achsrichtung mindestens eine auf der Mischkammer (4) vorspringende Rippe und mindestens eine Hohlkehle im Halter (1) aufweisen.

12. Vorrichtung nach einem beliebigen der Patentansprüche 7–11, dadurch gekennzeichnet, daß die Außenfläche der Mischkammer (4) zylindrisch bzw. annähernd zylindrisch ist, daß der Halter (1) eine Fläche (17) mit einer hohlen Aufnahme für die Mischkammer (4) aufweist, deren Form der der Außenfläche (53) entspricht, sowie dadurch, daß die spezifischen Mittel (51, 52) zum Ausrichten bzw. Feststellen in Achsrichtung in einer Ebene liegen, die senkrecht zu mindestens einem Teil der zylindrischen bzw. annähernd zylindrischen Außenflächen (53, 17) verläuft.

13. Vorrichtung nach einem beliebigen der Patentansprüche 9–12, dadurch gekennzeichnet, daß ein Vorsprung (51) und eine Kehle (2) der spezifischen Mittel zum Ausrichten bzw. Feststellen in Achsrichtung bei geradem Schnitt in Querrichtung die Form eines "U" aufweisen, dessen Flügel (54, 55) vom Innenbogen (56) nach außen hin auseinanderlaufen.

14. Vorrichtung nach einem beliebigen der Patentansprüche 7–13, dadurch gekennzeichnet, daß die Mischkammer (4) in Gleitrichtung der Einstellvorrichtung (11), verläuft, eine zentrale Bohrung (15) aufweist, in der die Einstellvorrichtung (11) hin- und hergleitet, indem sie durch ein Ende (24) dieser Bohrung (15) sowie durch eine Verteileröffnung (25) führt, die durch das gegenüberliegende Ende der Bohrung (15) gebildet wird, sowie dadurch, daß die spezifischen Mittel (51, 52) zum Ausrichten bzw. Feststellen in Achsrichtung in unmittelbarer Nähe desjenigen Teils (57) der Mischkammer (4) liegen, die der Verteileröffnung (25) in Achsrichtung gegenüberliegt.

15. Vorichtung nach einem beliebigen der Patentansprüche 1–14, dadurch gekennzeichnet, daß die beweglichen Einstellvorrichtungen (11) in ihrer Bewegung in der Mischkammer (4) durch Führungen (59) gleiten, die fest mit der Mischkammer verbunden und in dieser integriert sind, ohne jegliche sonstige Führung hinsichtlich Halter (1) bzw. Steuervorrichtungen (6).

16. Vorrichtung nach einem beliebigen der Patentansprüche 3–6 und 7–15, dadurch gekennzeichnet, daß die spezifischen Mittel (51, 52) zum Ausrichten bzw. Feststellen in Achsrichtung eine Form aufweisen, durch die sie durch Schwenken um ihre Gelenke (14) mit den Steuervorrichtungen (6) von der vom Halter (1) getrennten Mischkammer (1) und der Einstellvorrichtungen (11) getrennt werden können.

17. Vorrichtung nach einem beliebigen der Patentansprüche 1–16, dadurch gekennzeichnet, daß sie eine Handbedienungsvorrichtung (5) besitzt, insbesondere in Form eines Drückers zum Auslösen der Steuervorrichtungen (6).

18. Vorrichtung nach Patentanspruch 17, dadurch gekennzeichnet, daß der Halter (1) zur leichteren Handhabung die allgemeine Form einer Pistole besitzt.

19. Vorrichtung nach einem beliebigen der Patentansprüche 1–18, dadurch gekennzeichnet, daß die Mischkammer (4) einen Kern aus Teflonr® (64) oder ähnlichem Material besitzt, in den eine Mischbohrung (15) eingelassen ist, wobei dieser Kern (64) in ein Gehäuse (31) eingefügt ist, sowie dadurch, daß in der Umgebung der Verteileröffnung (25) der Kern an das Gehäuse (31) stößt bzw. aus diesem tritt, so daß die verteilte Mischung sich nicht auf dem Gehäuse (31) um die Öffnung (25) herum ansammeln kann.

20. Vorrichtung nach Patentanspruch 19, dadurch gekennzeichnet, daß die Mischkammer (4) elastische Mittel (65) zum Zusammenpressen des Kerns (64) vom Typ einer Stopfbuchse besitzt und daß der Kern eine Rückhalteschulter (66) in der Nähe der Öffnung (25) aufweist, wobei diese Schulter (66) mit einem Wulst (67) des Gehäuses (31) zusammenpaßt, um ein ungewolltes Austreten des Kerns (64) aus dem Gehäuse (31) zu verhindern.

21. Gerät zum Verteilen von Schaum, insbesondere von Polyurethanschaum zu Verpackungszwecken, dadurch gekennzeichnet, daß es über voneinander unabhängige Medienbehälter sowie Mittel verfügt, die die Zuführung der Medien unter Druck zu einer Vorrichtung nach einem beliebigen der Patentansprüche 1–20 gewährleisten.

22. Handgerät zur Verteilung von Schaum, insbesondere von Polyurethanschaum zu Verpackungszwecken nach Patentanspruch 21, dadurch gekennzeichnet, daß es über eine Vorrichtung zur besseren Handhabung nach Patentanspruch 18 verfügt.

EP 0 278 849 B1

FIG.1

FIG.2

FIG. 3

FIG. 4